# EUROPÄISCHE PATENTSCHRIFT

(11) **EP 1 522 459 B1**
(45) Veröffentlichungstag und Bekanntmachung des Hinweises auf die Patenterteilung: **16.01.2013**
(21) Anmeldenummer: 04104754.9
(22) Anmeldetag: 29.09.2004
(51) Int. Cl.: B60Q 3/02, F21V 8/00, F21Y 101/02

(54) **Innenleuchte für Fahrzeuge**
Interior light for vehicle
Lampe intérieur pour véhicule

(30) Priorität: 07.10.2003 DE 10347053
(43) Veröffentlichungstag der Anmeldung: 13.04.2005
(73) Patentinhaber: Hella KGaA Hueck & Co., 59552 Lippstadt (DE)
(72) Erfinder: Ruch, Burkhard, 79677 Schönenberg (DE)
(74) Vertreter: Huwer, Andreas

(56) Entgegenhaltungen:
- EP-A- 1 221 628
- DE-U1- 20 019 073
- FR-A- 2 612 854
- US-A1- 2002 043 012
- US-A1- 2002 106 929
- US-A1- 2003 081 401

## Beschreibung

Die Erfindung betrifft eine Innenleuchte nach dem Oberbegriff von Anspruch 1.

Eine derartige Innenleuchte ist aus US 2002/0043012 A1 bekannt. Sei weist als Lichtquelle zwei Leuchtdioden auf, die über flexible elektrische Leiter mit einer separaten Ansteuerelektronik verbundenen sind, die es ermöglicht, die Leuchtdioden ein und aus zu schalten. Jede Leuchtdiode ist jeweils mit ihrer Abstrahlseite einer an der Stirnseite eines Lichtleiters angeordneten Lichteintrittsfläche zugewandt. Der Lichtleiter weist nutenförmige Auskoppelelemente auf, an denen das in ihm geführte Licht der Leuchtdiode derart abgelenkt wird, dass es an einer gegenüberliegenden Lichtaustrittsfläche aus dem Lichtleiter austritt. Die Auskoppelelemente sind derart benachbart zu der betreffenden Lichteintrittsfläche angeordnet, dass zumindest ein Teil der von der Leuchtdiode abgestrahlten Lichtstrahlen nach dem Durchtritt durch die Lichteintrittsfläche direkt auf die Auskoppelelemente auftrifft. Die Montage der Innenleuchte im Fahrzeug ist jedoch bei beengten Platzverhältnissen schwierig.

Aus DE 200 19 073 U1 ist ferner eine Innenleuchte für Fahrzeuge bekannt, die als Lichtquelle eine Leuchtdiode aufweist, die mit ihrer Abstrahlseite einer an der Stirnseite eines stabförmigen Lichtleiters angeordneten Lichteintrittsfläche zugewandt ist. Der Lichtleiters weist Auskoppelelemente auf, an denen das in ihm geführte Licht der Leuchtdiode derart abgelenkt wird, dass es an einer Lichtaustrittsfläche aus dem Lichtleiter austritt. Die Auskoppelelemente sind derart benachbart zur Lichteintrittsfläche angeordnet, dass ein Teil der von der Leuchtdiode abgestrahlten Lichtstrahlen nach dem Durchtritt durch die Lichteintrittsfläche direkt auf die Auskoppelelemente auftrifft. Auch bei dieser Innenleuchte ist die Montage im Fahrzeug ist bei beengten Platzverhältnissen schwierig.

Aus US 5 548 492 ist eine Innenleuchte zur Beleuchtung von zwei Make-up-Spiegeln bekannt, die eine in einem zylindrischen Gehäuse angeordnete elektrische Lichtquelle aufweist, die über ein Kabel mit einer von dem Gehäuse beabstandeten Ansteuerelektronik verbundenen ist. Die Lichtquelle ist hinter einer am Dachhimmel eines Fahrzeugs montierten Dachbedieneinheit angeordnet. Von dem Lichtquellen-Gehäuse gehen mehrere bandförmige, flexible Lichtleiter aus, die jeweils mit ihrer Lichteintrittsfläche der Lichtquelle zugewandt sind. Die Lichtleiter führen zu beidseits der Dachbedieneinheit am Dachhimmel verschwenkbar angeordneten Sonnenblenden, in welche die Make-up-Spiegel eingebaut sind. Die Lichtleiters weisen jeweils an ihren von der Lichtquelle entfernten Endbereichen flachseitig eine Lichtaustrittsfläche auf, die hinter einer in der Sonnenblende vorgesehenen Lichtaustrittsöffnung angeordnet ist. Im Bereich der Lichtaustrittsflächen haben die Lichtleiter eine raue Oberflächenstruktur, die durch Sandstrahlen erzeugt ist. Zwischen dieser Oberflächenstruktur und Lichteintrittsfläche weisen die Lichtleiter einen Lichtleiterabschnitt auf, in dem das von der Lichtquelle abgestrahlte, in den Lichtleiter eingekoppelte Licht unter Ausnutzung der Totalreflexion zwischen den Grenzfläche des Lichtleiters hin- und herreflektiert wird, um es zu der Lichtaustrittsfläche weiterzuleiten. In der Praxis treten dabei jedoch Abstrahlverluste auf. Auch ist das Verlegen des Lichtleiters im Fahrzeug noch relativ kompliziert. Insbesondere ist zu beachten, dass der Lichtleiter beim Verlegen nicht geknickt oder zu stark gekrümmt wird.

Es besteht deshalb die Aufgabe, eine Innenleuchte der eingangs genannten Art zu schaffen, die sich auch bei beengten Platzverhältnissen auf einfache Weise im Fahrzeug montieren lässt und die es ermöglicht, das in dem Lichtleiter geführte Licht dicht hinter der Lichteintrittsfläche des Lichtleiters aus diesem auszukoppeln und für die Beleuchtung des Fahrzeuginnenraums zu nutzten.

Diese Aufgabe wird mit den Merkmalen des Anspruchs 1 gelöst. In vorteilhafter Weise wird also ein Teil der von der Leuchtdiode abgestrahlten Lichtstrahlen nach dem Einkoppeln in den Lichtleiter gleich zu den Auskoppelelementen geleitet und von dort in Richtung auf die Lichtaustrittsfläche abgelenkt. Dabei wird auf dem Weg von der Lichteintrittsfläche zu den Auskoppelelementen eine Reflexion an einer Grenzfläche des Lichtleiters vermieden. Der Weg zwischen der Lichteintrittsfläche und der Lichtaustrittsfläche ist also möglichst kurz gewählt, dass das in den Lichtleiter eingekoppelte Licht gleich für Beleuchtungszwecke genutzt werden kann. Somit werden Abstrahlverluste in dem Strahlengang zwischen der Lichteintrittsfläche und der Lichtaustrittsfläche vermieden. Da die Leuchtdiode über einen flexiblen elektrischen Leiter mit der Ansteuerelektronik verbunden ist, kann die Ansteuerelektronik von dem Lichtleiter und der Leuchtdiode entfernt an einer Stelle im Fahrzeug angeordnet werden, an der genügend Platz für die Ansteuerelektronik vorhanden ist und an der diese bei der Montage und im Servicefall gut zugänglich ist. Der Lichtleiter und die Leuchtdiode lassen sich somit auch an einer Stelle im Fahrzeug einbauen, an der nur wenig Platz vorhanden ist. Die Beleuchtungseinrichtung ermöglicht deshalb auch bei beengten Platzverhältnissen eine einfache Montage. Sollte der Lichtleiterstab beispielsweise bei einem Unftall einmal beschädigt werden, kann er von der Kupplungsaufnahme getrennt und dann durch ein entsprechendes Ersatzteil ersetzt werden. Zwischen der Kupplungsaufnahme und dem Kupplungsabschnitt des Lichtleiters kann eine Rastverbindung vorgesehen sein, mit deren Hilfe der Kupplungsabschnitt auf einfache Weise an der Kupplungsaufnahme fixiert werden kann. Durch den Schlitz der Hülse hindurch kann das in dem Lichtleiter geführte Licht praktisch direkt hinter der Lichteintrittsfläche des Lichtleiters aus diesem ausgekoppelt und für die Beleuchtung des Fahrzeuginnenraums genutzt werden.

Bei einer bevorzugten Ausführungsform der Erfindung ist der Leiter als Folienleiter mit einer elektrisch isolierenden Trägerfolie ausgebildet, auf der Leiterbahnen angeordnet sind. Dadurch ergibt sich ein sehr flach aufgebauter leichter Lichtleiter, der beispielsweise zwischen dem Dachhimmel und dem Dach des Fahrzeugs und/oder zwischen einem Innenverkleidungselement und einem dazu benachbarten Karosserieblech platzsparend verlegt werden kann.

Bei einer zweckmäßigen Ausgestaltung der Erfindung ist die Leuchtdiode und/oder wenigstens ein elektrisches Bauelement der Ansteuerelektronik direkt auf der Trögerfolie angeordnet und vorzugsweise mit den darauf befindlichen Leiterbahnen verlötet. Die Innenleuchte weist dann einen einfachen und kostengünstigen Aufbau auf

Vorteilhaft ist, wenn das Lichteinkoppelmodul ein erstes, die Kupplungsaufnahme aufweisendes Gehäuseteil und ein zweites, als Wärmeableitkörper ausgebildetes Gehäuseteil aufweist, wenn der Folienleiter zwischen den Gehäuseteilen eingeklemmt ist, und wenn das zweite Gehäuseteil flächig an der der Leuchtdiode abgewandten Rückseite des Folienleiters anliegt. Die Innenleuchte ermöglicht dann bei ihrer Fertigung eine einfache Montage des Follenleiters mit der daran angeordneten Leuchtdiode an dem Lichtleiter. Das zweite Gehäuseteil erfüllt eine Doppelfunktion und dient außer zum Anklemmen des Folienleiters an dem Lichteinkoppelmodul auch als Wärmeableitelement, das die in der Leuchtdiode auftretende Verlustwärme flächig von der Leuchtdiode beispielsweise an die Umgebung ableitet. Das Wörmeableitelement besteht vorzugsweise aus Metall und kann gegebenenfalls als Biegestanzteil aus Blech ausgebildet sein.

Bei einer vorteilhaften Ausführungsform der Erfindung ist die Ansteuerelektronik in einem Gehäuse angeordnet, wobei das Gehäuse ein erstes, eine Innenhöhlung mit einer Öffnung aufweisendes Gehäuseelement und ein zweites, die Öffnung abdeckendes Gehäuseelement aufweist, wobei der Folienleiter derart zwischen den Gehäuseelementen eingeklemmt ist, dass das wenigstens eine elektrische Bauelement in der Innenhöhlung angeordnet ist, und wobei das zweite Gehäuseelement als metallischer Wärmeablleltörper ausgebildet ist, der flächig an der dem wenigstens einen elektrischen Bauelement abgewandten Rückselte des Folienleiters anliegt, Das zweite Gehäuseteil erfüllt dabei eine Doppelfunktion und dient außer zum Ankommen und Positionieren des Follenleiters an dem ersten Gehäusetell auch als Wärmeableitelement, das die in dem wenigstens einen elektrischen Bauelement auftretende Verlustwärme flächig von dem Bauelement (den Bauelementen) ableitet. Das Wärmeableitelement ist vorzugsweise als Biegestanzteil aus Blech ausgebildet.

Zweckmäßigerweise ist an wenlgstens einen Wärmeableitkörper mindestens ein Bügelteil angeformt, das einen Haltevorsprung des dem Wärmeableitkörper zugeordneten Gehäuseteils und/oder Gehäuseelements formschlüssig hintergreift. Dabei kann die formschlüssige Verbindung zwischen dem Bügelteil und dem diesem zugeordneten Gehäuseteil bzw. Gehäuseelement als Rastverbindung ausgebildet sein. Der Folienleiter kann dann bel der Fertigung der Innenleuchte noch leichter an dem Gehäuse der Ansteuerelektronik und/oder dem Lichteinkoppelmodulmontiert werden.

Das Bügelteil ist bevorzugt als etwa U-förmiges, elastisches Element ausgebildet, das mit seiner Erstreckungsebene vorzugsweise etwa rechlwinklig zur Erstreckungsebene des zwischen den Gehäuseteilen bzw. Gehäuseelementen eingeklemmten Teilbereichs des Folienleiters angeordnet ist. Der Wärmeableitkörper kann dann bei der Fertigung der Innenleuchte auf einfache Wiese auf das Gehäuseteil bzw. Gehäuseelement aufgeclipst werden.

Vorteilhaft ist, wenn an dem ersten Gehäuseelement mit Stromversorgungsleitungen verbindbare elektrische Anschlusskontakte angeordnet sind, die über die Leiterbahnen mit dem wenigstens einen elecktrischen Bauelement und/oder der Leuchtdiode verbunden sind, Dabei kann das erste Gehäuseelement eine Aufnahme für ein Kabelsteckverbindungsteil aufweisen, an dem Gegenkontakte angeordnet sind, welche In Gebrauchsstellung die Anschlusskontakte kontaktieren.

Nachfolgend sind Ausführungsbeispiele der Erfindung anhand der Zeichnung näher erläutert. Es zeigen;
- Fig.1: einen Längsschnitt durch ein erstes Ausführungsbeispiel der erfindungsgemäßen Innenleuchte,
- Fig. 2 und 3: dreidimensionale Ansichten der in Fig. 1 gezeigten Innenleuchte,
- Flg. 4: eine Ansicht auf die Stirnseite der in Fig. 1 und 2 gezeigten Innenleuchte,
- Fig. 5: eine dreidimensionale Ansicht eines zweiten Ausführungsbelspiels der erfindungsgemäßen Innenleuchte,
- Fig, 6: eine Ansicht auf die Stirnseite der In Fig. 5 gezeigten Innenleuchte,
- Fig. 7: elnen Längsschnitt durch dle In Flg. 6 gezeigte Innenleuchte entlang der in Fig. 6 mit VII bezeichneten Ebene, und
- Fig. 8: eine Explosionsdarstellung der Innenleuchte nach Fig. 5 bis 7.

Eine im Ganzen mit 1 bezeichnete Innenleuchte zur Beleuchtung eines Fahrzeuginnenraums weist als Lichtquelle eine Leuchtdiode 2 auf, die über einen Folienleiter 3 mit einer von der Leuchtdiode 2 beabstandeten Ansteuerelektronik verbundenen ist,

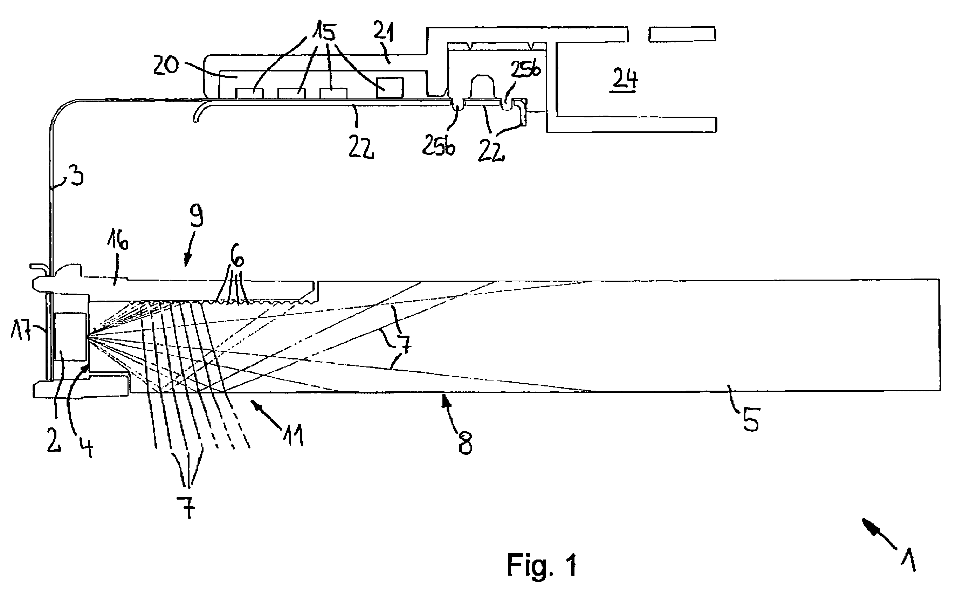

Wie in Fig. 1 besonders gut erkennbar ist, ist die Leuchtdiode 2 mit Ihrer Abstrahlseite einer Lichteintrittsfläche 4 eines stabförmigen Lichtleiters 5 zugewandt, die an der Stirneseite des Lichtleiters 5 angeordnet ist. Der Lichtleiter 5 hat an seinem Außenumfang einen etwa streifenförmigen, sich im Wesentlichen in Längsrichtung des Lichtleiters 5 erstreckenden Bereich, in dem optische Auskoppelelemente 6 angeordnet sind. In Fig, 1 und 7 ist erkennbar, dass die Auskoppelelemente 6 derart benachbart zu der Lichteintrittsfläche 4 angeordnet sind, dass ein Teil der von der Leuchtdiode 2 abgestrahlten Lichtstrahlen 7 nach dem Durchtritt durch die Lichteintrittsfläche 4 direkt und ohne zuvor an einer Grenzfläche des Lichtleiters 5 reflektiert zu werden auf die Auskoppelelemente 6 auftrifft, Ein weiterer Teil der Lichtstrahlen 7 wird unter Ausnutzung der Totalreflexion mindestens einmal am Außenumfangs des Lichtleiters 5 reflektiert bevor der entsprechende Lichtstrahl 7 auf ein Auskoppelelement 6 auftrifft,

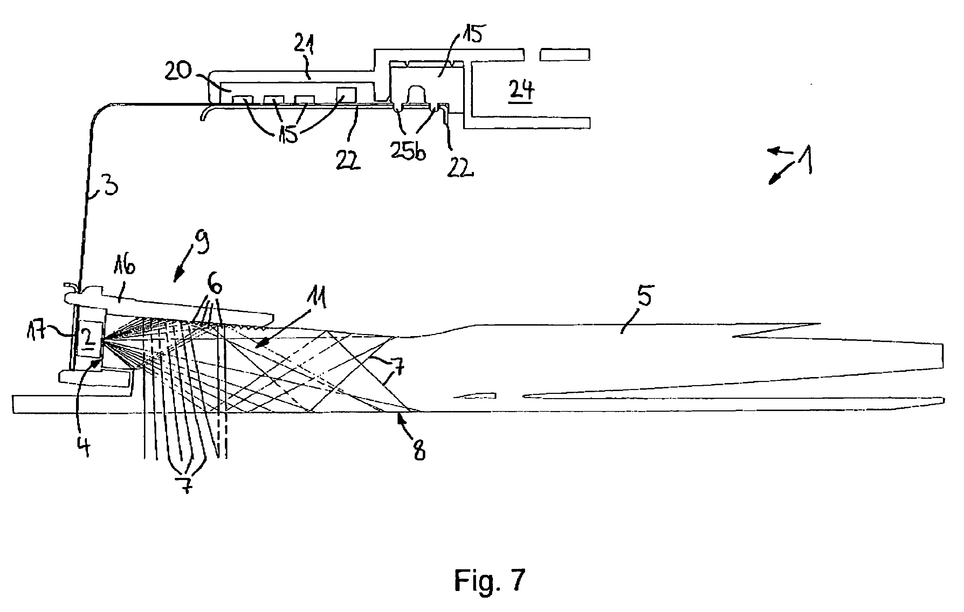

An den Auskoppelelementen 6 werden die Lichtstrahlen 7 derart abgelenkt, dass sie on einer an der den Auskoppelelementen 6 gegenüberliegenden Seite des Lichtleiters 5 befindlichen Lichtaustrittsfläche 8 aus dem Lichtleiter 5 austreten. Bei den in Fig. 1 und 7 gezeigten Ausführungsbeispielen sind die Auskoppelelemente 6 als Prismen ausgebildet. Es sind aber auch andere Ausführungsformen denkbar bei denen die Auskoppelelemente 6 durch eine Oberflächenrauhlgkelt die beispielsweise durch Sandstrahlen erzeugt sein kann, oder durch eine Lackschicht gebildet sein können.

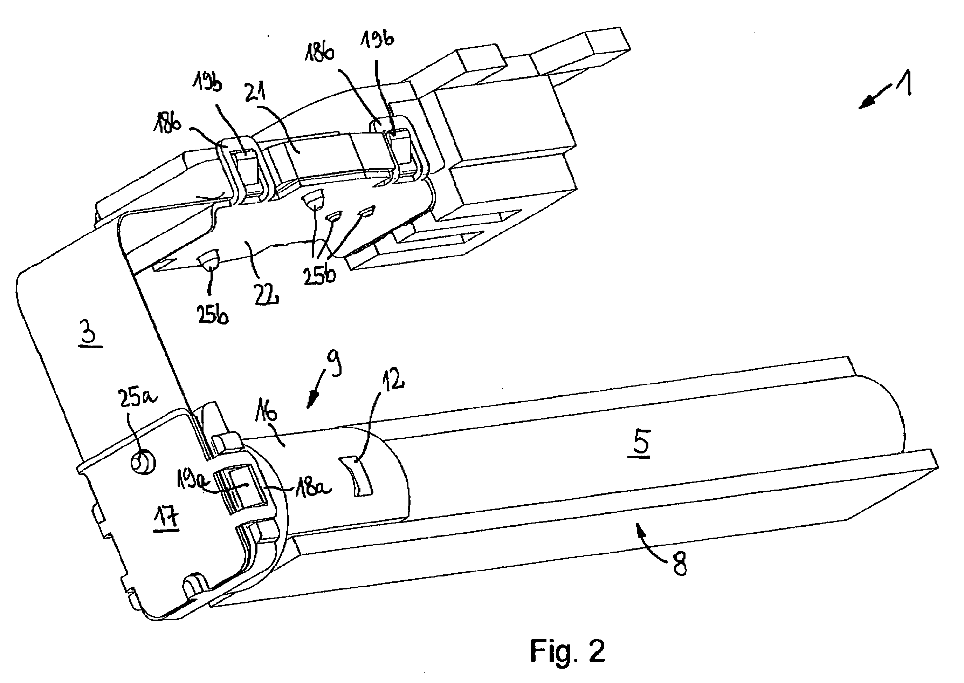

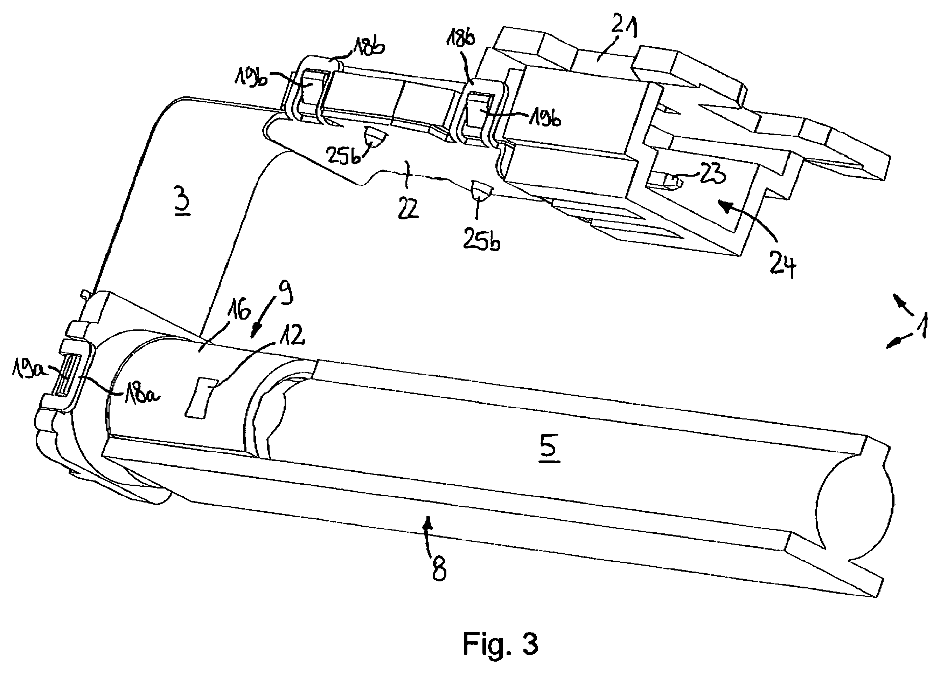

Wie in Fig. 2, 3, 5 und 8 besonders gut erkennbar ist bildet die Leuchtdiode 2 einen Teil eines Lichteinkoppelmoduls 9. Das Lichteinkoppelmodul 9 hat eine Kupplungsaufnahme 10, die lösbar mit einem dazu passenden Kupplungsabschnitt 11 des Lichtleiters 5 verbIndbar ist. Die Kupplungsaufhohrne 10 Ist als axial geschilltzte Hülse ausgebildet, die in ihrer Wandung Öffnungen 12 aufweist, in die bei in die Kupplungsaufnahme 10 eingesetztem Kupplungsabschnitt 11 Rastvorsprünge 13 eingreifen, die am Außenumfang des Lichtleiters 5 vorgesehen sind. Die Rastvorsprünge 13 weisen Einführschrägen auf

In Fig. 1, 7 und 8 Ist erkennbar, dass der Lichtleiter den Schlitz 14 der Hülse durchsetzt, wenn er mit seinem Kupplungsabschnitt 11 in die Kupplungsaufnahme 10 eingesetzt ist. Die Auskoppelelemente 6 sind an der dem Schlitz 14 abgewandten Seite des Kupplungsabschnitts 11 derart angeordnet dass ein Teil des auf die Auskoppelelemente 6 auftreffenden Lichts der Leuchtdiode an den Auskoppelelementen 6 derart abgelenkt wird, dass es durch den Schlitz 14 hindurch auf die Lichtaustrittsfläche 8 projiziert wird.

Der Folienleiter weist eine elektrisch isolierende, biegbare Trägerfolle auf, auf der in der Zeichnung nicht näher dargestellte Leiterbahnen angeordnet sind, welche elektrische Anschlüsse der Leuchtdiode 2 mit den in Fig. 1 und 7 abgebildeten elektrischen Bauelementen 15 der Ansteuerelektronik verbinden. Dabei sind die Leuchtdiode 2 und die Bauelemente 15 der Ansteuerelektronik direkt auf die Leiterbahnen der des Folienleiters 3 aufgelötet.

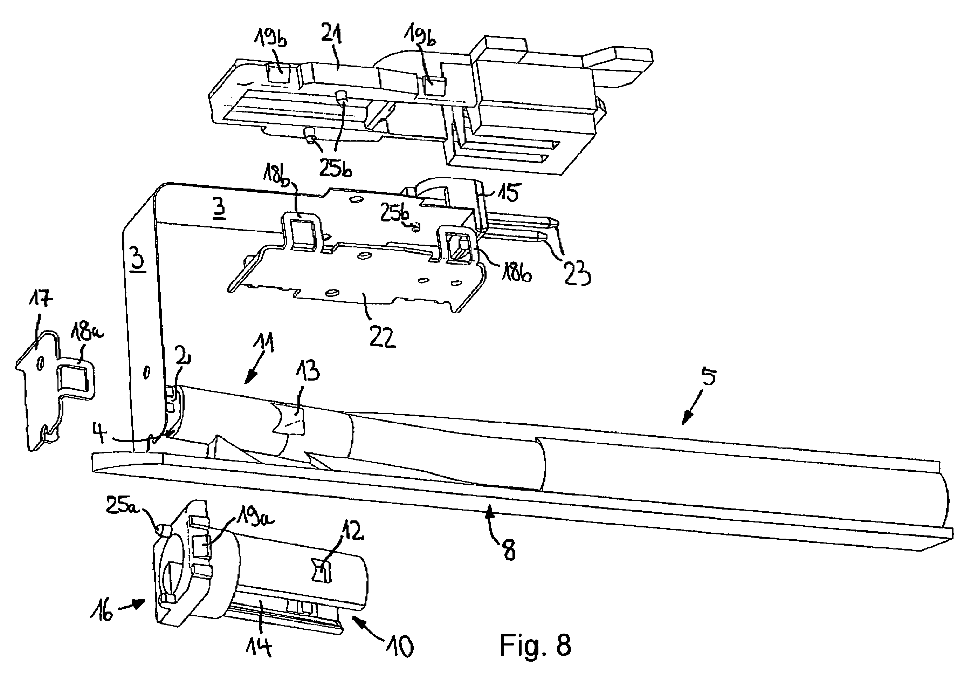

Das Lichteinkoppelmodul 9 weist ein erstes, die Kupplungsaufnahme 10 aufweisendes Gehäuseteil 16 und ein zweites, als Wärmeableitkörper aus Metall ausgebildetes Gehäuseteil 17 auf Wie in Fig. 1 und 7 besonders gut erkennbar ist, bilden die Gahäuseteile 16, 17 eine Klemme, in welcher der Folienleiter 3 mit einem zu der Leuchtdiode 2 benachbarten Endbereich eingeklemmt ist. Dabei liegt das zweite Gahäuseteil 17 flächig an der der Leuchtdiode 2 abgewandten Rückseite des Follenleiters 3 an, so dass die von der Leuchtdiode 2 abgegebene Verlustwärme über das zweite Gehäuseteil 17 gut an die Umgebung abgeführt wird, Wie in Fig. 8 besonders gut erkennbar ist, ist an dem ersten Gehäusetell 16 eln Zugentlastungsvorsprung 25a angeordnet der eine Lochung des Folienleiters 3 durchsetzt und in eine dahinter befindliche Öffnung des zweiten Gehäuseteils 16 eingreift.

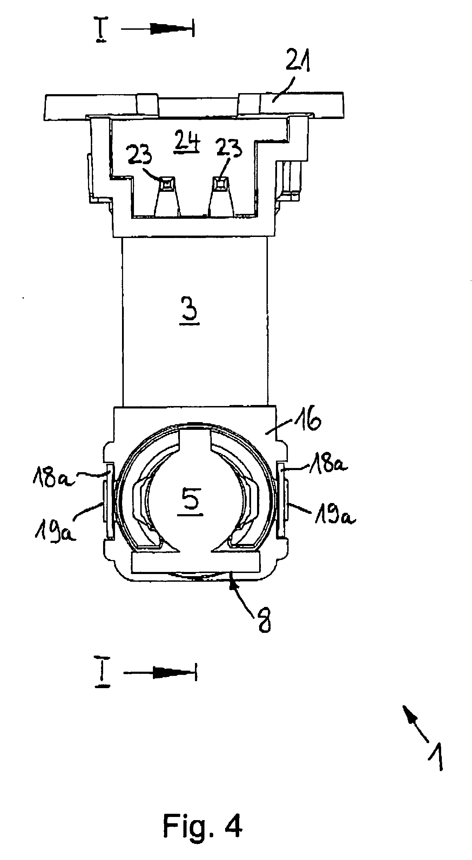

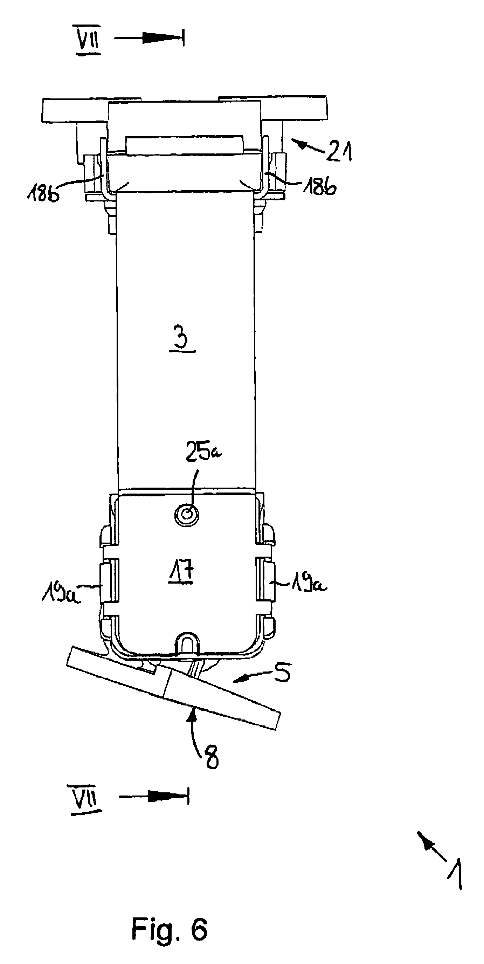

Das zweite Gehäuseteil 17 ist als Biegestanztell ausgebildet, an das Bügelteile 18a angeformt sind, die an dem ersten Gehäuseteil 16 vorgesehene Haltevorsprünge 19a formschlüsslg hintergreifen (Fig. 2 bis 6). Die Haltevorsprünge , 19a sind beidseits des ersten Gehäuseteils 16 angeordnet und weisen jeweils eine Einführschräge für das Ihnen zugeordnete Bügelteil 18a auf,

In Fig. 2, 3, 5 und 8 Ist erkennbar, dass dle Bügeltelle 18a jeweils als etwa U-förmiges, elastisches Element ausgebildet sind, das mit seinem U-Quersteg den ihm zugeordneten Haltevorsprung 19a hintergreift- und mit den von dem U-Quersteg entfernten Enden seiner U-Schenkel mit dem flächig an dem Follenlelter 3 anliegenden Teilbereich des zweiten Gehäusateils 17 verbunden ist. Dabei sind die Bügelteile 18a mit ihrer Erstreckungsebene jeweils etwa rechtwinklig zur Erstreckungsebene des zwischen den Gehäusetellen 16, 17 eingeklemmten Teilbereichs des Folienleiters 3 angeordnet.

In Fig. 1 und 7 ist erkennbar, dass die elektrischen Bauelemente 15 der Ansteuerelektronik in einem Gehäuse angeordnet sind, das ein erstes, eine Innenhöhlung 20 mit einer Öffnung aufweisendes Gehäuseelement 21 und ein zweites, die Öffnung abdeckendes Gehäuseelement 22 aufweist Die Gehäuseelemente 21, 22 sind als Klemme ausgebildet, in welcher der Folienleiter 3 mit einem zu den Bauelementen 15 benachbarten Endbereich eingeklemmt ist. Das zweite Gehäuseelement 22 ist als Wärmeableitkörper aus Metall ausgebildet, der flächig an der den Bauelementen 15 abgewandten Rückselte des Folienlelters 3 anliegt, so dass die von den Bauelementen 15 abgegebene Verlustwärme über das zweite Gehäuseelement 22 gut an die Umgebung abgeführt werden kann. Wie in Fig. 8 besonders gut erkennbar ist, sind an dem ersten Gehäuseelement 21 Zugentlastungsvorsprünge 25b angeordnet die jeweils eine Lochung des Folienleiters 3 durchsetzen und in eine dahinter befindliche, ihnen jeweils zugeordnete Öffnung des zweiten Gehäuseelements 22 eingreifen. Die Bauelemente 15 sind in der Innenhöhlung 20 des ersten Gehäuseelements 21 angeordnet.

Das zweite Gehduseelernent 22 Ist als Blegestoriztell ausgebildet, an das Bügelteile 18b angeformt sind, die Haltevorsprünge 19b des ersten Gehäuseelements 21 formschlüssig hintergreifen (Fig. 2, 3, 5 und 6). Die Haltevorsprünge 19b sind beidseits des ersten Gehäuseelements 21 angeordnet und weisen jeweils eine Einführschräge für das ihnen zugeordnete Bügelteil 18b auf,

In Fig. 2, 3, 5 und 8 ist erkennbar, dass die Bügelteile 18b jeweils als etwa U-förmiges, elastisches Element ausgebildet sind, das mit seinem U-Quersteg den ihm zugeordneten Haltevorsprung 19b hintergreift und mit den von dem U-Quersteg entfernten Enden seiner U-Schenkel mit dem flächig an dem Folienleiter 3 anliegenden Teilbereich des zweiten Gehäuseelements 22 verbunden ist. Dabei sind die Bügelteile 18b mit ihrer Erstreckungsebene jeweils etwa rechtwinklig zur Erstreckungsebene des zwischen den Gehäuseelementen 21, 22 eingeklemmten Teilbereichs des Follenleiters 3 angeordnet.

In Fig. 2, 4 und 8 ist erkennbar, dass an dem ersten Gehäuseelement 21 als Kontaktstifte ausgebildete eleleische Anschlusskontakte 23 zum Verbinden mit Stromversorgungsleitungen vorgesehen sind. Die Anschlusskontakte 23 sind in einer Aufhahmevertiefung 24 für ein In der Zeichnung nicht näher dargestelltes Kabelsteckverbindungsteil angeordnet, das zu den Anschlusskontakte passende Anschlussbuchsen aufweist, welche in Gebrauchsstellung die Anschlusskontaklte 23 kontaktleren.

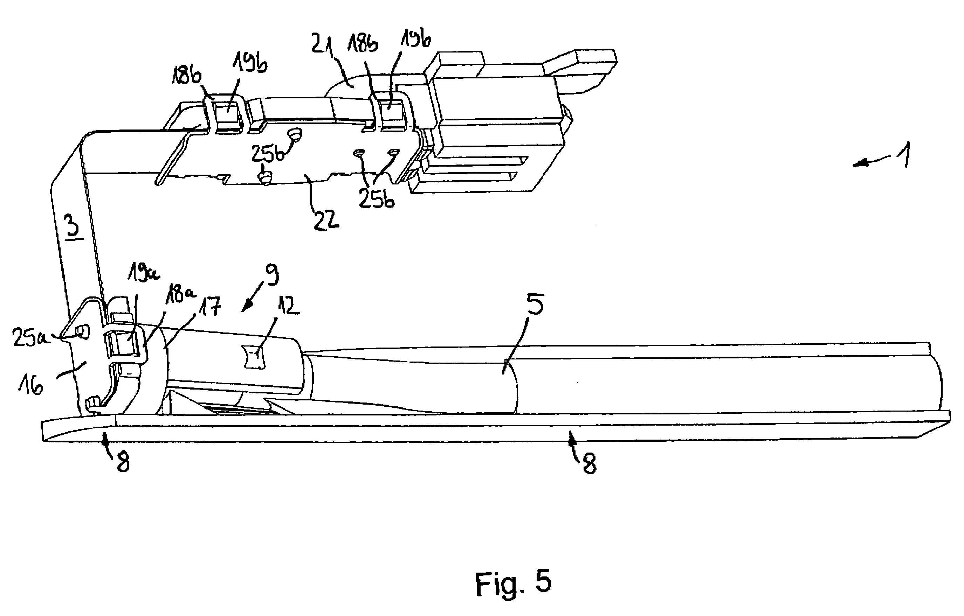

Erwähnt werden soll noch, dass bei dem Ausführungsbeispiel nach Fig. 1 bis 3 die Lichtaustrittsfläche 8 In Hauptabstrahirichung der Leuchtdiode 8 vor dieser angeordnet. Bel dem Ausführungsbeispiel nach Fig. 5 bis 8 ist dle Llchtaustrltrsfläche 8 bis hinter die Leuchtdiode 2 verlöngert. Bei dem Ausführungsbeispiel nach Fig. 1 bis 4 ist die Ebene, in welcher der Folienleiter 3 zwischen den Gehäuseteilen 16, 17 eingeklemmt ist, etwa rechtwinklig zur Längsachse des Lichtleiters 5 angeordnet. Bei dem Ausführurigsbeispiel nach Fig. 5 verläuft die Ebene, in welcher der Follenleiter 3 zwischen den Gehäuseteilen 16, 17 eingeklemmt ist, schräg zur Längsachse des Lichtleiters 5. In Fig. 2 Ist erkennbar, dass der Lichtleiter 5 einen etwa omegaförmigen Querschnitt aufweist,

## Patentansprüche

1. Innenleuchte (1) für Fahrzeuge mit mindestens einer Leuchtdiode (2) als Lichtquelle, die über einen flexiblen elektrischen Leiter mit einer separaten Ansteuerelektronik verbundenen ist, wobei die Leuchtdiode (2) mit ihrer Abstrahlseite einer Lichteintrittsfläche (4) eines Lichtleiters (5) zugewandt ist, wobei der Lichtleiter (5) Auskoppelelemente (6) aufweist, an denen das in ihm geführte Licht der Leuchtdiode (2) derart abgelenkt wird, dass es an einer Lichtaustrittsfläche (8) aus dem Lichtleiter (5) austritt, wobei die Auskoppelelemente (6) derart benachbart zu der Lichteintrittsfläche (4) angeordnet sind, dass zumindest ein Teil der von der Leuchtdiode (2) abgestrahlten Lichtstrahlen (7) nach dem Durchtritt durch die Lichteintrittsfläche (4) direkt auf die Auskoppelelemente (6) auftrifft, **dadurch gekennzeichnet, dass** der Lichtleiter (5) als Lichtleitstab mit einem Kupplungsabschnitt (11) ausgebildet ist, der lösbar mit einer dazu passenden Kupplungsaufnahme (10) eines die Leuchtdiode (2) aufweisenden Lichteinkoppelmoduls (9) verbindbar ist, dass die Kupplungsaufnahme (10) als axial geschlitzte Hülse ausgebildet ist und der Lichtleiter (5) den Schlitz (14) der Hülse durchsetzt, und dass wenigstens ein Auskoppelelement (6) des Lichtleiters (5) an dem in die Hülse eingreifenden Kupplungsabschnitt (11) derart von dem Schlitz (14) beabstandet angeordnet ist, dass das auf das Auskoppelelement (6) auftreffende Licht der Leuchtdiode (2) an dem Auskoppelelement (6) derart abgelenkt wird, dass es durch den Schlitz (14) hindurch in Richtung auf die gegenüberliegende Lichtaustrittsfläche (8) projiziert wird.

2. Innenleuchte (1) nach Anspruch 1, **dadurch gekennzeichnet, dass** der elektrische Leiter als Folienleiter (3) mit einer elektrisch isolierenden Trägerfolie ausgebildet ist, auf der Leiterbahnen angeordnet sind.

3. Innenleuchte (1) nach Anspruch 2, **dadurch gekennzeichnet, dass** die Leuchtdiode (2) und/oder wenigstens ein elektrisches Bauelement (15) der Ansteuerelektronik direkt auf der Trägerfolie angeordnet und vorzugsweise mit den darauf befindlichen Leiterbahnen verlötet ist (sind).

4. Innenleuchte (1) nach Anspruch 2 oder 3, **dadurch gekennzeichnet, dass** das Lichteinkoppelmodul (9) ein erstes, die Kupplungsaufnahme (10) aufweisendes Gehäuseteil (16) und ein zweites, als Wärmeableitkörper ausgebildetes Gehäuseteil (17) aufweist, dass der Folienleiter (3) zwischen den Gehäuseteilen (16, 17) eingeklemmt ist, und dass das zweite Gehäuseteil (17) flächig an der der Leuchtdiode (2) abgewandten Rückseite des Folienleiters (3) anliegt.

5. Innenleuchte (1) nach einem der Ansprüche 2 bis 4, **dadurch gekennzeichnet, dass** die Ansteuerelektronik in einem Gehäuse angeordnet ist, dass das Gehäuse ein erstes, eine Innenhöhlung (20) mit einer Öffnung aufweisendes Gehäuseelement (21) und ein zweites, die Öffnung abdeckendes Gehäuseelement (22) aufweist dass der Folienleiter (3) derart zwischen den Gehäuseelementen (21, 22) eingeklemmt ist, dass das wenigstens eine elektrische Bauelement (15) in der Innenhöhlung (20) angeordnet ist, und dass das zweite Gehäuseelement (22) als metallischer Wärmeableitkörper ausgebildet ist, der flächig an der dem wenigstens einen elektrischen Bauelement (15) abgewandten Rückseite des Folienleiters (3) anliegt.

6. Innenleuchte (1) nach Anspruch 4 oder 5, **dadurch gekennzeichnet, dass** an wenigstens einen Wärmeableitkörper mindestens ein Bügelteil (1 8a, 18b) angeformt ist, das einen Haltevorsprung (19a, 19b) des dem Wärmeableitkörper zugeordneten Gehäuseteils (16) und/oder Gehäuseelements (21) formschlüssig hintergreift.

7. Innenleuchte (1) nach Anspruch 6, **dadurch gekennzeichnet, dass** das Bügelteil (18a, 18b) als etwa U-förmiges, elastisches Element ausgebildet ist, das mit seiner Erstreckungsebene vorzugsweise etwa rechtwinklig zur Erstreckungsebene des zwischen den Gehäuseteilen (16, 17) bzw. Gehäuseelementen (21, 22) eingeklemmten Teilbereichs des Folienleiters (3) angeordnet ist.

8. Innenleuchte (1) nach einem der Ansprüche 5 bis 7, **dadurch gekennzeichnet, dass** an dem ersten Gehäuseelement (21) mit Stromversorgungsleitungen verbindbare elektrische Anschlusskontakte (23) angeordnet sind, die über die Leiterbahnen mit dem wenigstens einen elektrischen Bauelement (15) und/oder der Leuchtdiode (2) verbunden sind.

## Claims

1. Interior light (1) for vehicles comprising at least one light-emitting diode (2) as light source, which is connected to separate drive electronics via a flexible electrical conductor, wherein the light-emitting diode (2) with its emission side faces a light entry surface (4) of a fibre optic conductor (5), wherein the fibre optic conductor (5) has coupling-out elements (6), at which the light supplied to said fibre optic conductor from the light-emitting diode (2) is deflected in such a way that it exits from the fibre optic conductor (5) at a light exit surface (8), wherein the coupling-out elements (6) are arranged adjacent to the light entry surface (4) in such a way that at least some of the light rays (7) emitted by the light-emitting diode (2) impinge directly on the coupling-out elements (6) after passage through the light entry surface (4), **characterized in that** the fibre optic conductor (5) is in the form of a light-guiding rod with a coupling section (11), which can be connected detachably to a mating coupling receptacle (10) of a light coupling-in module (9) having the light-emitting diode (2), **in that** the coupling receptacle (10) is in the form of an axially slotted sleeve and the fibre optic conductor (5) passes through the slot (14) in the sleeve, and **in that** at least one coupling-out element (6) of the fibre optic conductor (5) is arranged on the coupling section (11) engaging in the sleeve, spaced apart from the slot (14), in such a way that the light from the light-emitting diode (2) which impinges on the coupling-out element (6) is deflected at the coupling-out element (6) in such a way that it is projected through the slot (14) in the direction of the opposite light exit surface (8).

2. Interior light (1) according to Claim 1, **characterized in that** the electrical conductor is in the form of a film conductor (3) with an electrically insulating carrier film, on which conductor tracks are arranged.

3. Interior light (1) according to Claim 2, **characterized in that** the light-emitting diode (2) and/or at least one electrical component (15) of the drive electronics is/are arranged directly on the carrier film and preferably with the conductor tracks located thereon.

4. Interior light (1) according to Claim 2 or 3, **characterized in that** the light coupling-in module (9) has a first housing part (16) having the coupling receptacle (10) and a second housing part (17) in the form of a heat-dissipating body, **in that** the film conductor (3) is clamped in between the housing parts (16, 17), and **in that** the second housing part (17) bears flat against the rear side, remote from the light-emitting diode (2), of the film conductor (3).

5. Interior light (1) according to one of Claims 2 to 4, **characterized in that** the drive electronics are arranged in a housing, **in that** the housing has a first housing element (21) having an inner cavity (20) with an opening and a second housing element (22) covering the opening, **in that** the film conductor (3) is clamped in between the housing elements (21, 22) in such a way that the at least one electrical component (15) is arranged in the inner cavity (20), and **in that** the second housing element (22) is in the form of a metal heat-dissipating body, which bears flat against the rear side, remote from the at least one electrical component (15), of the film conductor (3).

6. Interior light (1) according to Claim 4 or 5, **characterized in that** at least one clip part (18a, 18b) is integrally formed on at least one heat-dissipating body, said clip part engaging behind a holding projection (19a, 19b) of the housing part (16) and/or housing element (21) associated with the heat-dissipating body in a form-fitting manner.

7. Interior light (1) according to Claim 6, **characterized in that** the clip part (18a, 18b) is in the form of an approximately U-shaped elastic element, which is arranged with its plane of extent preferably approximately at right angles to the plane of extent of that subregion of the film conductor (3) which is clamped in between the housing parts (16, 17) or housing elements (21, 22).

8. Interior light (1) according to one of Claims 5 to 7, **characterized in that** electrical connection contacts (23), which can be connected to power supply lines and are connected to the at least one electrical component (15) and/or the light-emitting diode (2) via the conductor tracks, are arranged on the first housing element (21).

## Revendications

1. Lampe intérieure (1) pour véhicules comprenant au moins une diode électroluminescente (2) en tant que source de lumière, laquelle est reliée par le biais d'un conducteur électrique souple avec une électronique de commande séparée, la diode électroluminescente (2) faisant face avec son côté émission à une surface d'entrée de lumière (4) d'un conducteur optique (5), le conducteur optique (5) présentant des éléments de découplage (6) sur lesquels la lumière de la diode électroluminescente (2) qui est guidée dans celui-ci peut être déviée de telle sorte qu'elle sorte du conducteur optique (5) au niveau d'une surface de sortie de lumière (8), les éléments de découplage (6) étant disposés adjacents à la surface d'entrée de lumière (4) de telle sorte qu'au moins une partie des rayons lumineux (7) émis par la diode électroluminescente (2) vient heurter directement les éléments de découplage (6) après être passée à travers la surface d'entrée de lumière (4), **caractérisée en ce que** le conducteur optique (5) est réalisé sous la forme d'une tige conductrice de lumière munie d'une portion d'accouplement (11) qui peut être reliée de manière amovible avec un logement d'accouplement (10) lui correspondant d'un module d'injection de lumière (9) qui présente la diode électroluminescente (2), **en ce que** le logement d'accouplement (10) est réalisé sous la forme d'un manchon fendu dans le sens axial et le conducteur optique (5) traverse la fente (14) du manchon, et **en ce qu'**au moins un élément de découplage (6) du conducteur optique (5) est disposé espacé de la fente (14) au niveau de la portion d'accouplement (11) qui vient en prise dans le manchon de telle sorte que la lumière de la diode électroluminescente (2) qui vient heurter l'élément de découplage (6) est déviée au niveau de l'élément de découplage (6) de telle sorte qu'elle est projetée à travers la fente (14) en direction de la surface de sortie de lumière (8) qui se trouve à l'opposé.

2. Lampe intérieure (1) selon la revendication 1, **caractérisée en ce que** le conducteur électrique est réalisé sous la forme d'un film conducteur (3) muni d'un film porteur électriquement isolant sur lequel sont disposées des pistes conductrices.

3. Lampe intérieure (1) selon la revendication 2, **caractérisée en ce que** la diode électroluminescente (2) et/ou au moins un composant électrique (15) de l'électronique de commande sont disposés directement sur le film porteur et est (sont) de préférence brasé(s) sur les pistes conductrices qui se trouvent sur celui-ci.

4. Lampe intérieure (1) selon la revendication 2 ou 3, **caractérisée en ce que** le module d'injection de lumière (9) présente une première partie de boîtier (16) qui présente le logement d'accouplement (10) et une deuxième partie de boîtier (17) réalisée sous la forme d'un corps dissipateur de chaleur, **en ce que** le film conducteur (3) est coincé entre les parties de boîtier (16, 17) et **en ce que** la deuxième partie de boîtier (17) repose à plat sur le côté arrière du film conducteur (3) qui est à l'opposé de la diode électroluminescente (2).

5. Lampe intérieure (1) selon l'une des revendications 2 à 4, **caractérisée en ce que** l'électronique de commande est disposée dans un boîtier, **en ce que** le boîtier présente un premier élément de boîtier (21) présentant une cavité intérieure (20) munie d'une ouverture et un deuxième élément de boîtier (22) recouvrant l'ouverture, **en ce que** le film conducteur (3) est coincé entre les éléments de boîtier (21, 22) de telle sorte qu'au moins un composant électrique (15) est disposé dans la cavité intérieure (20), et **en ce que** le deuxième élément de boîtier (22) est réalisé sous la forme d'un corps dissipateur de chaleur métallique qui repose à plat sur le côté arrière du film conducteur (3) qui est à l'opposé de l'au moins un composant électrique (15).

6. Lampe intérieure (1) selon la revendication 4 ou 5, **caractérisée en ce qu'**au moins une pièce en étrier (18a, 18b) est façonnée sur au moins un corps dissipateur de chaleur, laquelle vient en prise par l'arrière par complémentarité de forme avec une partie en saillie d'arrêt (19a, 19b) de la partie de boîtier (16) et/ou de l'élément de boîtier (21) associé(e) au corps dissipateur de chaleur.

7. Lampe intérieure (1) selon la revendication 6, **caractérisée en ce que** la pièce en étrier (18a, 18b) est réalisée sous la forme d'un élément souple approximativement en forme de U qui est disposé avec son plan de projection de préférence environ perpendiculairement au plan de projection de la zone partielle du film conducteur (3) qui est coincée entre les parties de boîtier (16, 17) ou les éléments de boîtier (21, 22).

8. Lampe intérieure (1) selon l'une des revendications 5 à 7, **caractérisée en ce que** des contacts de raccordement électrique (23) pouvant être reliés avec des câbles d'alimentation électrique sont disposés sur le premier élément de boîtier (21), lesquels sont reliés par le biais des pistes conductrices avec l'au moins un composant électrique (15) et/ou la diode électroluminescente (2).
